(19)
Europäisches Patentamt
European Patent Office
Office européen des brevets

(11) **EP 2 983 179 A1**

(12) **EUROPEAN PATENT APPLICATION**
published in accordance with Art. 153(4) EPC

(43) Date of publication:
**10.02.2016 Bulletin 2016/06**

(21) Application number: **14772880.2**

(22) Date of filing: **17.03.2014**

(51) Int Cl.:
*H01F 27/24* (2006.01)     *H01F 27/255* (2006.01)
*H01F 41/02* (2006.01)     *H02M 3/155* (2006.01)
*H02M 3/28* (2006.01)

(86) International application number:
**PCT/JP2014/057156**

(87) International publication number:
**WO 2014/156770 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.03.2013  JP 2013061529**
                **07.03.2014  JP 2014044972**

(71) Applicant: **NTN Corporation**
**Osaka-shi, Osaka 550-0003 (JP)**

(72) Inventors:
• **NODA, Hiroyuki**
  **Kuwana-shi, Mie 511-8678 (JP)**
• **MORI, Natsuhiko**
  **Kuwana-shi, Mie 511-8678 (JP)**
• **UEMOTO, Ikuo**
  **Kameyama-shi, Mie 519-0212 (JP)**

(74) Representative: **Gassner, Wolfgang et al**
**Dr. Gassner & Partner mbB**
**Patentanwälte**
**Marie-Curie-Strasse 1**
**91052 Erlangen (DE)**

(54) **ELECTRIC CIRCUIT-USE CORE AND DEVICE USING SAME**

(57)     An electric circuit-use core which has low loss, is less susceptible to magnetic saturation, thus allows for size reduction and current increase, and has a wide operation range in high-frequency region, and a manufacturing method for the core are provided. The electric circuit-use core (1) is a dust core formed by compression molding or injection molding with an iron-based amorphous material, a cobalt-based amorphous material, or a sendust material as a magnetic material, and is used as a transformer core, a choke core, or a core of a reactor. The electric circuit-use core (1) includes cylindrical pillar portions (2) and connection portions (3).

Fig. 1

EP 2 983 179 A1

**Description**

CROSS REFERENCE TO THE RELATED APPLICATION

This application is based on and claims Convention priority to Japanese patent application No. 2013-061529, filed March 25, 2013, and Japanese patent application No. 2014-044972, filed March 7, 2014, the entire disclosures of which are herein incorporated by reference as a part of this application.

BACKGROUND OF THE INVENTION

(Field of the Invention)

The present invention relates to an electric circuit-use core such as a transformer core, a choke core, and a reactor-use core, and various devices using the electric circuit-use core, such as a solar cell power generation device, an on-vehicle step-up device, a charging station-use quick charging device, and an emergency power supply device for a data center.

(Description of Related Art)

Hitherto, as an electric circuit-use core, ferrite core has mainly been used. However, in a high-frequency region and in a high-current region, there is a problem of magnetic saturation which can be considered as the fate of ferrite. Thus, ferrite core has been used with, for example, a combination of methods such as mechanically providing a gap and increasing of the size of ferrite core itself. A dust core has also been used for the electric circuit-use core.

[Related Document]

[Patent Document]

[Patent Document 1] JP Laid-open Patent Publication No. 2008-48527
[Patent Document 2] JP Patent No. 4763609
[Patent Document 3] JP Patent No. 4635000
[Patent Document 4] JP Patent No. 4452240

With a core material called a dust core, it is possible to compensate for the above drawback of ferrite, but it is also well-known that the dust core is inferior to ferrite in unique characteristics such as iron loss.
In addition, these materials are produced with a mold, thus their sizes are fixed, and it is not an exaggeration to say that, for practical use, their sizes are determined when a material is selected.

SUMMARY OF THE INVENTION

An object of the present invention is to provide an electric circuit-use core which has low loss, is less susceptible to magnetic saturation, thus allows for size reduction and current increase, and has a wide operation range in high-frequency region.
Another object of the present invention is to provide various electric circuit-use cores which are allowed to be efficiently manufactured.
Still another object of the present invention is to provide a DC/DC conversion circuit and a DC/AC conversion circuit which have high conversion efficiency and allow for size reduction.
Still another object of the present invention is to provide a solar cell power generation device which has high conversion efficiency and allows for size reduction.
Still another object of the present invention is to provide an on-vehicle step-up device which has high conversion efficiency and allows for size reduction.
Still another object of the present invention is to provide a charging station-use quick charging device which has high conversion efficiency and allows for size reduction and current increase.
Still another object of the present invention is to provide an emergency power supply device for a data center which has high conversion efficiency and allows for size reduction and current increase.
Still another object of the present invention is to provide a manufacturing method which allows efficient manufacturing of various electric circuit-use cores which are less susceptible to magnetic saturation, thus allows for size reduction and current increase, and have a wide operation range in high-frequency region.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:

Fig. 1 is an external perspective view of an electric circuit-use core according to one embodiment of the present invention;
Fig. 2 is an external perspective view of an electric circuit-use core of another example according to the embodiment;
Fig. 3 is a cutaway front view of a transformer using the electric circuit-use core in Fig. 1;
Fig. 4 is an exploded front view of the electric circuit-use core in Fig. 1;
Fig. 5 is a front view of an electric circuit-use core of still another example according to the embodiment;
Fig. 6 is an exploded front view of this electric circuit-use core;
Fig. 7 is a cutaway front view of a transformer including an electric circuit-use core used for a simulation;
Fig. 8 is an electric circuit diagram of the electric circuit-use core;
Fig. 9 shows contour diagrams and vector diagrams of a magnetic flux density in a cross section of a sample of the embodiment, which are a result of the simulation;
Fig. 10 shows contour diagrams and vector diagrams of the magnetic flux density in the cross section of the sample of the embodiment which are a result of the simulation in another state;
Fig. 11 shows contour diagrams and vector diagrams of a magnetic flux density in a cross section of a sample which are a result of simulation in a conventional art example;
Fig. 12 shows contour diagrams and vector diagrams of the magnetic flux density in the cross section of the sample which are a result of the simulation in another state in the conventional art example;
Fig. 13 is a graph of voltage variation with time in the simulation of the embodiment;
Fig. 14 is a graph of current variation with time in the simulation of the embodiment;
Fig. 15 is a graph of a general magnetization curve;
Fig. 16 is a graph of a magnetization curve in the case of forward control;
Fig. 17 is an explanatory diagram of the forward control;
Fig. 18 is a graph of a magnetization curve in the case of flyback control;
Fig. 19 is an explanatory diagram of the flyback control;
Fig. 20 is an explanatory diagram of plasticity of an electric circuit-use core;
Fig. 21 is an explanatory diagram of another example of the plasticity of the electric circuit-use core;
Fig. 22 is an explanatory diagram of still another example of the plasticity of the electric circuit-use core;
Fig. 23 is an explanatory diagram of still another example of the plasticity of the electric circuit-use core;
Fig. 24 is an explanatory diagram of still another example of the plasticity of the electric circuit-use core;
Fig. 25 is an explanatory diagram of still another example of the plasticity of the electric circuit-use core;
Fig. 26 is a circuit diagram of an example of a transformer using the electric circuit-use core;
Fig. 27 is a block diagram of an example of a solar cell power generation device using the electric circuit-use core;
Fig. 28 is an electric circuit diagram of an example of a motor drive device of an electric vehicle using the electric circuit-use core;
Fig. 29 is an electric circuit diagram of an example of a step-up section in the motor drive device;
Fig. 30 is an explanatory diagram of an example of a charging station using the electric circuit-use core;
Fig. 31 shows a circuit of an example of a DC/AC converter of a quick charger in the charging station;
Fig. 32 is a block diagram of an example of a data center-use uninterruptible power supply device using the electric circuit-use core; and
Fig. 33 is a block diagram of another example of the solar cell power generation device using the electric circuit-use core.

DESCRIPTION OF EMBODIMENTS

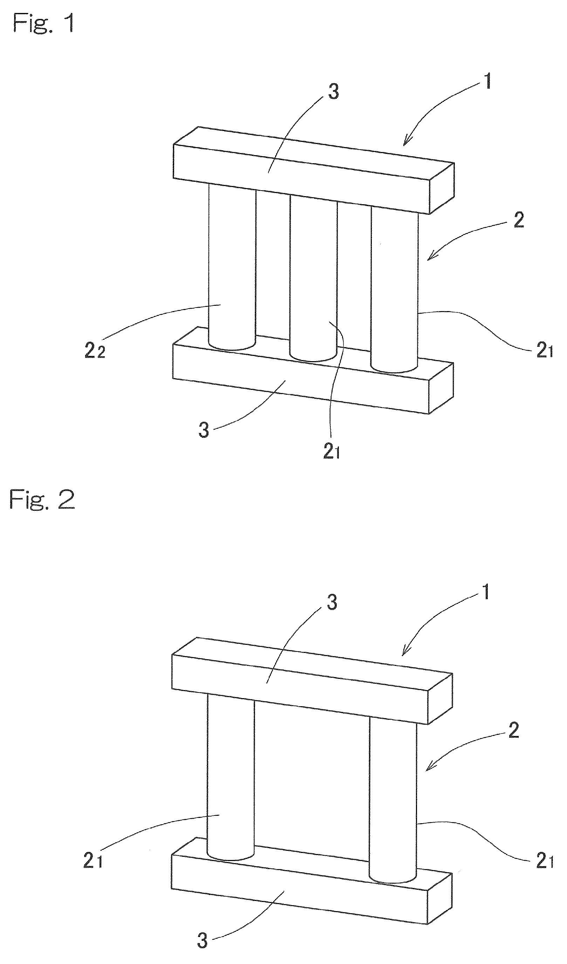

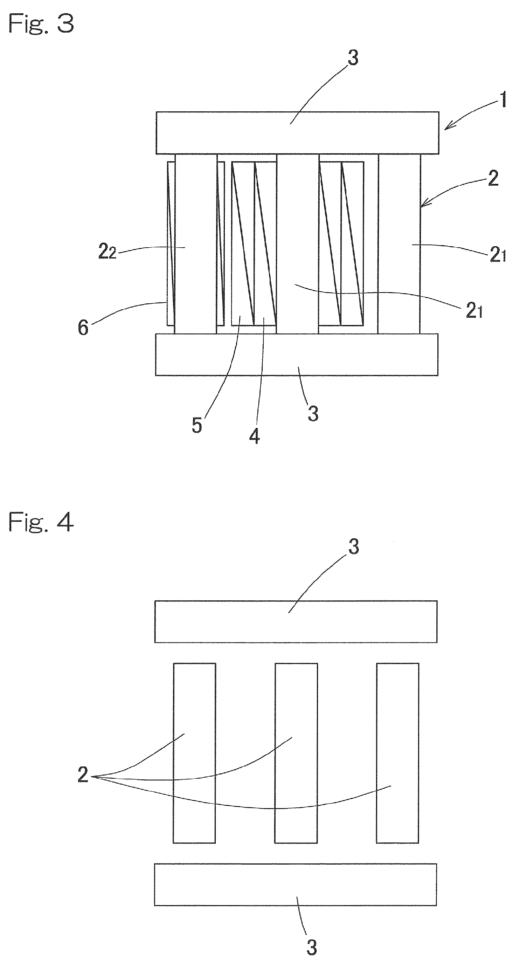

Embodiments of the present invention will be described with reference to the drawings. Fig. 1 is a perspective view showing an electric circuit-use core according to an embodiment of the present invention. The electric circuit-use core 1 is used as a transformer core, a choke core, or a core of a reactor, and includes a plurality of parallel pillar portions 2, each made of a magnetic material, and a plurality of connection portions 3 which connect one ends of these pillar portions 2 to each other and the other ends of these pillar portions 2 to each other, respectively. Each pillar portion 2 has a cylindrical shape in this example, and each connection portion 3 has a bar shape or a band-like plate shape with a rectangular cross section. In this present embodiment, there are provided three pillar portions 2 parallel to each other in a longitudinal direction. They include two main pillar portions $2_1$, $2_1$ which are disposed at the center of connection portion 3 and one end thereof, and a reverse excitation pillar portion $2_2$ which is disposed at the other end of connection portion 3. Each pillar portion 2 and each connection portion 3 are separately molded as shown in Fig. 4 and are joined to each other. Each pillar portion 2 and each connection portion 3 are in contact with each other, but may not be necessarily joined to each other, and, for example, may be held such that each pillar portion 2 and each connection portion 3 are in contact with each other in a state where each pillar portion 2 and each connection portion 3 are held by a coil bobbin (not shown). In addition, each pillar portion 2 and each connection portion 3 may be integrally molded.

The reverse excitation pillar portion $2_2$ is used for later-described flyback transformer, and may not be necessarily provided, for other use. The electric circuit-use core 1 may be configured with two pillar portions 2 ($2_1$, $2_1$) and two connection portions 3 by omitting the reverse excitation pillar portion $2_2$ as shown in Fig. 2.

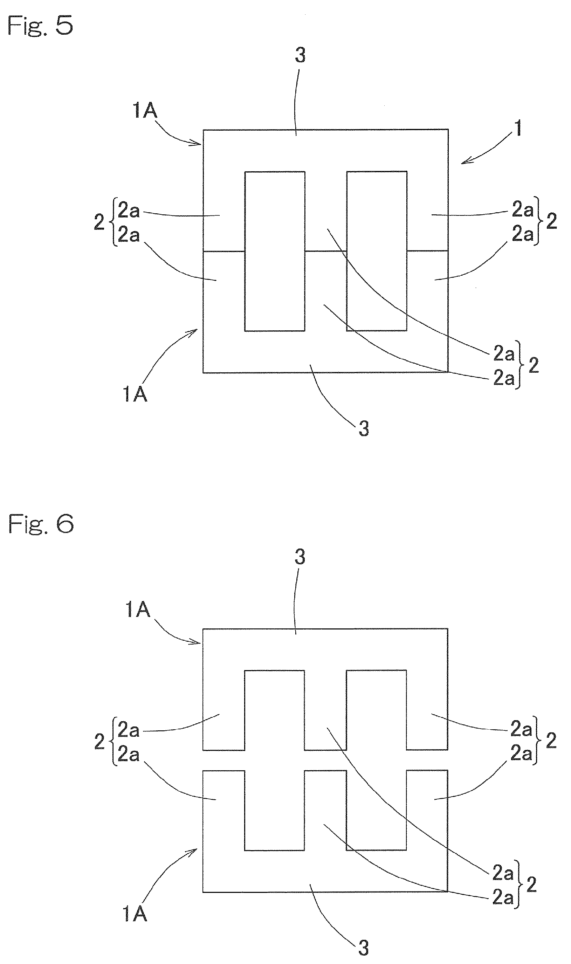

In addition, as shown in Figs. 5 and 6, two E-shaped core half bodies 1A, 1A may be disposed so as to be opposed to each other such that divisional pillar portions 2a in the respective core half bodies 1A, 1A are butted at ends thereof to each other. The butted surfaces may be joined to each other or may be merely in contact with each other.

In the electric circuit-use core 1 having the above configuration shown in the above referred drawings, an iron-based amorphous material, a cobalt-based amorphous material, or a sendust material is used as the magnetic material. The electric circuit-use core 1 is configured as a dust core in which the pillar portions 2 and the connection portions 3, or the respective core half bodies 1A, 1A are separately formed through compression molding or injection molding. The iron-based amorphous material means to include an iron/boron-based amorphous material. The iron-based amorphous material is, for example, an amorphous material containing Fe-Si-Al-C-B. The sendust material described above is Fe-Si-Al.

Fig. 3 shows an example of a transformer using the electric circuit-use core in Fig. 1, and the transformer is configured such that a primary coil 4 and a secondary coil 5 are wound around the main pillar portion $2_1$ that is disposed at the center, and a reverse excitation coil 6 is wound around the reverse excitation pillar portion $2_2$ at the end. The secondary coil 5 is wound on the outer periphery of the primary coil 4.

Due to the above material, the electric circuit-use core 1 having this configuration has low loss, and has high conversion efficiency. In addition, the electric circuit-use core 1 is less susceptible to magnetic saturation, thus allows for size reduction and current increase, and has a wide operation range in high-frequency region. Thus, when the electric circuit-use core 1 is used as a transformer core, a choke core, or a core of a reactor, each advantageous effect described above is effectively exerted, so that functions required for these cores are obtained.

In particular, the amorphous magnetic material has high conversion efficiency of voltage stepping-up/voltage transformation, and is suitable for a transformer core and a choke coil core. The sendust material has conversion efficiency close to that of the amorphous magnetic material, is low in cost, and has good processability. In addition, also with a transformer core using a Fe-6.5% Si material, excellent performance is obtained.

In addition, in the case where the electric circuit-use core 1 includes the cylindrical pillar portions 2 and the connection portions 3 shown in Fig. 1 or 2, the following advantages are obtained. Specifically, in the case where the electric circuit-use core 1 is configured with the E-shaped core half bodies 1A shown in Figs. 5 and 6, it is necessary to integrally mold the entirety of E-shaped core half body 1A, thus a load on a mold (not shown) for molding is high, and the mold itself is large in size. In addition, in the case where different types of cores are configured, for example, in the case where two types of cores, a core having a reverse excitation pillar portion and a core having no reverse excitation pillar portion, are manufactured, molds dedicated for the respective cores are required. Also in the case where cores having different pillar portion lengths are manufactured, molds dedicated for the respective cores are required. However, when the electric circuit-use core 1 includes the cylindrical pillar portions 2 and the plate-shaped or bar-shaped connection portions 3 as shown in Fig. 1 or 2, it is possible to separately mold each pillar portion 2 and each connection portion 3, and molds can be small. In addition, in the case where two types of cores, the electric circuit-use core 1 having the reverse excitation pillar portion $2_2$ in Fig. 1, and the electric circuit-use core 1 having the configuration in Fig. 2 having no reverse excitation pillar portion $2_2$, are manufactured, the main pillar portions $2_1$, $2_1$ and the connection portions 3 can be used for both of two types of the electric circuit-use cores 1. Thus, cost of the molds is small. Restrictions imposed by the coil bobbin are also eliminated.

Instead of the reverse excitation pillar portion $2_2$ around which a coil is wound on the outer periphery thereof, a permanent magnet may be provided for reverse excitation. In this case, the electric circuit-use core can be easily manufactured only with changing of only the pillar portion, and change to a flyback type becomes also easy.

Next, the results of magnetic simulation analysis performed through transient response magnetic field analysis will be described.

[Simulation Model]

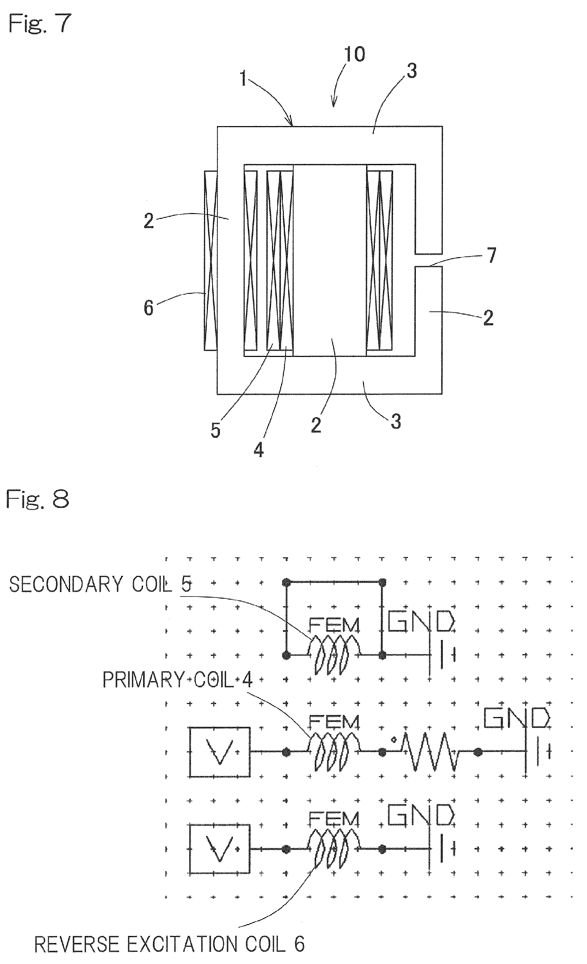

Fig. 7 shows an image diagram of a model, and Fig. 8 shows a circuit diagram of the model. In Fig. 7, the transformer 10 is configured such that the electric circuit-use core 1 includes three pillar portions 2 and a pair of connection portions 3, a primary coil 4 and a secondary coil 5 are wound on the center pillar portion 2 which serves as a middle leg, and a reverse excitation coil 6 is wound around the pillar portion 2 at one end. The secondary coil 5 is wound on the outer periphery of the primary coil 4. The pillar portion 2 at the other end has a magnetic gap 7.

In a simulation,

(1) a resistor is added to the primary coil side of an equivalent circuit in order to adjust a primary coil-side output current,
(2) DC power having a constant value of 24 V is set as reverse excitation coil power, and
(3) a rectangular DC output which repeatedly alternates between 24 V and 0 V is set as primary coil power.

The results of the analysis are shown in Table 1. The numeric values in this table are values recorded in and after a fourth cycle in which waveforms are stabilized.

[Table 1]

| Results of Analysis of Outlet Feeding Transformer Core | | | | | | |
|---|---|---|---|---|---|---|
| | | Target value | Fe-6.5 Si | Sendust | AL60 | PC40 |
| Core dimensions | (mm) | EER-42/42/20 | Outermost dimensions: 35×41.4×11.3 | | | EER-42/42/20 |
| Core volume | (mm$^3$) | - | 10622 (E core×2) | | | 23282 (EER core×2) |
| Primary winding | (turns) | 16 | 14 | 13 | 22 | 25 |
| Secondary winding | (turns) | 45 | 45 | 45 | 45 | 45 |
| L value (input side) | ($\mu$H) | 50±20% | 48 | 48 | 49 | 54 |
| Primary voltage | (V) | 37 | 37 | 37 | 37 | 37 |
| Secondary voltage | (V) | 100 | 104 | 102 | 97 | 103 |
| Primary current | (A) | 5.5 | 5.5 | 5.6 | 5.4 | 5.5 |
| Secondary current | (A) | 2.0 | 1.9 | 1.9 | 2.0 | 2.6 |
| The wire diameter is $\varphi$0.7×4P at the primary side and $\varphi$0.7×2P at the secondary side. | | | | | | |

Regarding PC40 (ferrite) EER-42/42/20 which is conventional one, with the target number of turns of windings, target characteristics are not met. In order to meet the characteristics, it is necessary to slightly increase the numbers of turns of the primary and secondary windings.

Regarding any of the soft magnetic materials of the embodiment, the analysis results that meet the target are obtained with a core size of 1/2 of EER-42/42/20 in a volume ratio. However, regarding AL60, it is necessary to slightly increase the number of turns of windings in order to meet the target characteristics, and accordingly, Fe-6.5 Si can be more preferable.

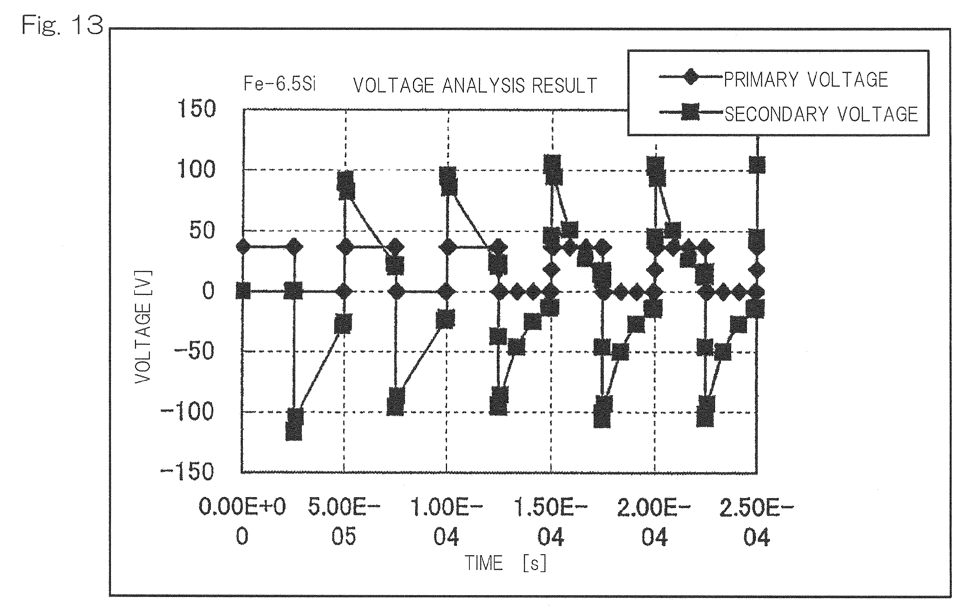

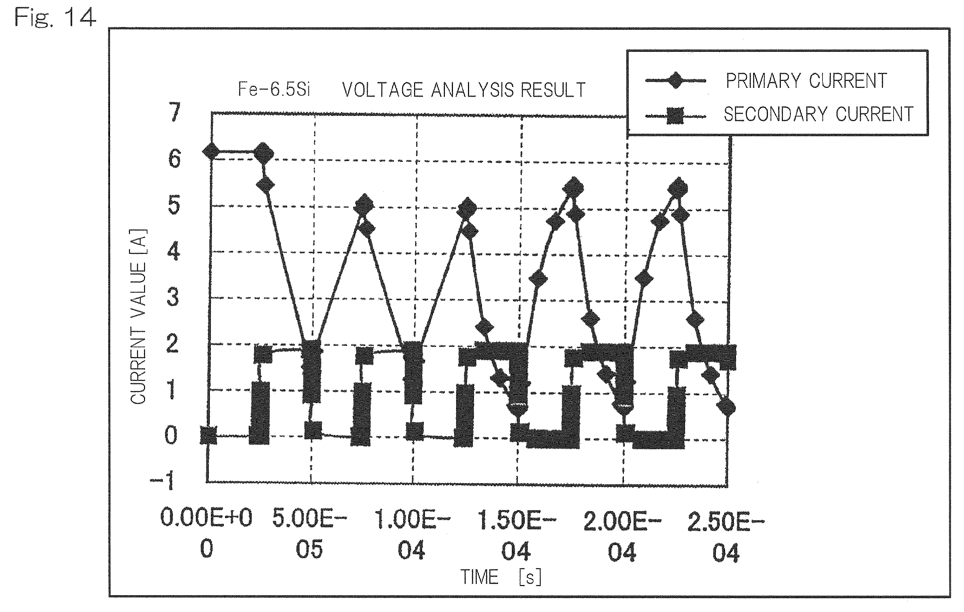

Figs. 13 and 14 show analyzed waveforms of primary and secondary currents of Fe-6.5 Si as a representative. Normally, control is performed in only the first quadrant on a B-H curve for the primary voltage and current, to also vary the secondary current and voltage in proportion to the number of coil turns. By performing reverse excitation, control can be performed also in the third quadrant on the B-H curve for the primary voltage and current, to obtain the secondary voltage and current having great amplitudes between positive and negative values.

[Contour Display and Vector Display of Magnetic Flux Density]

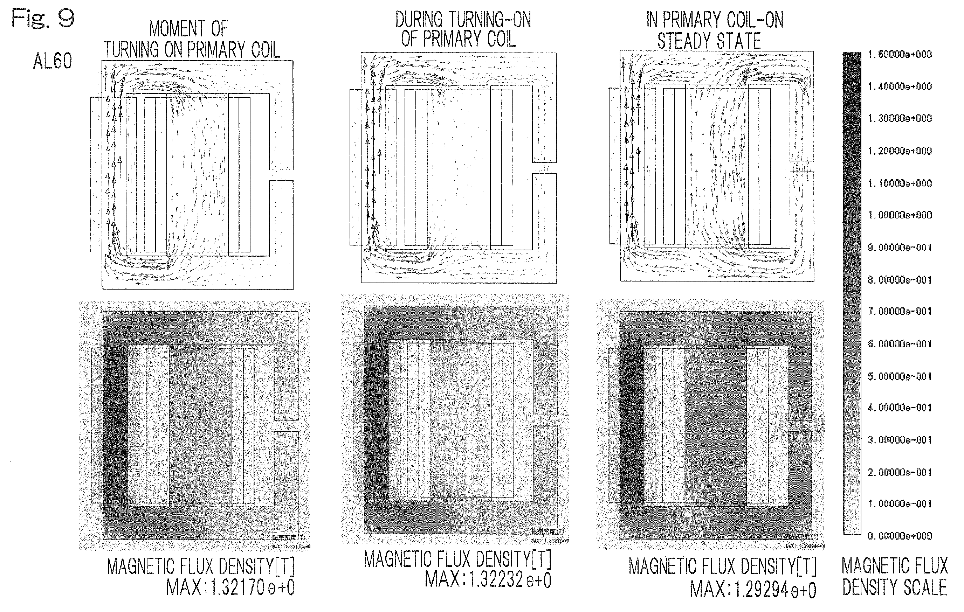

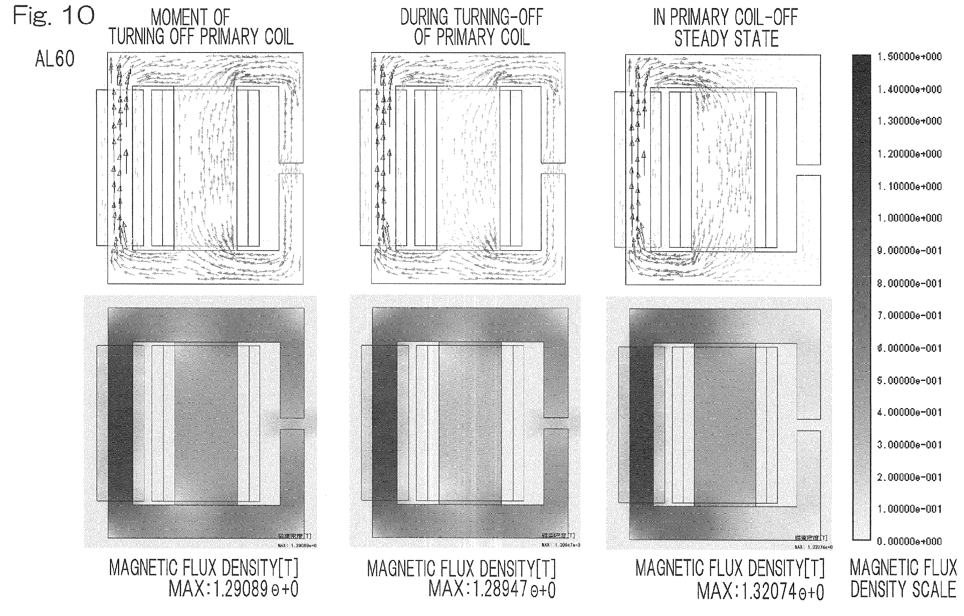

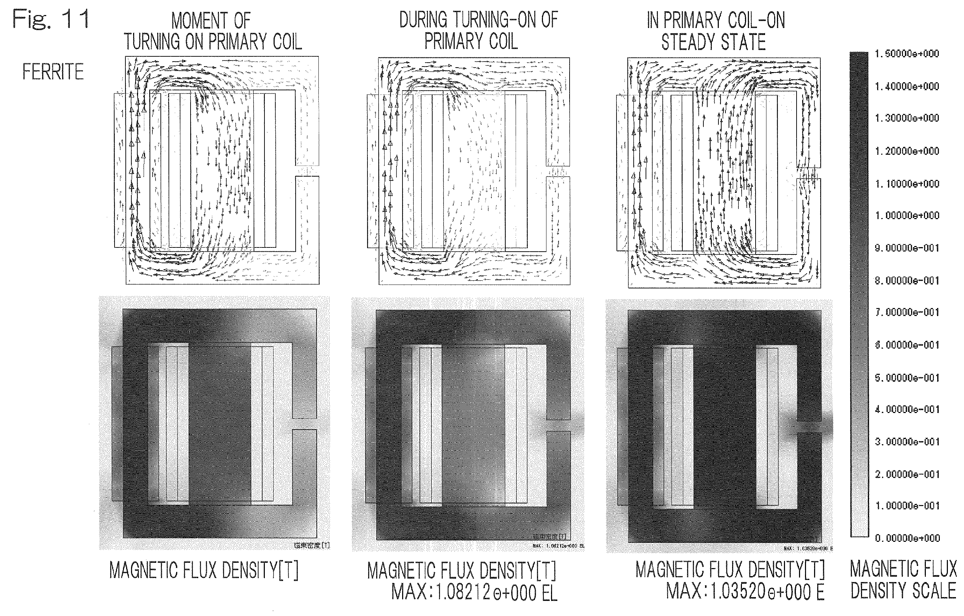

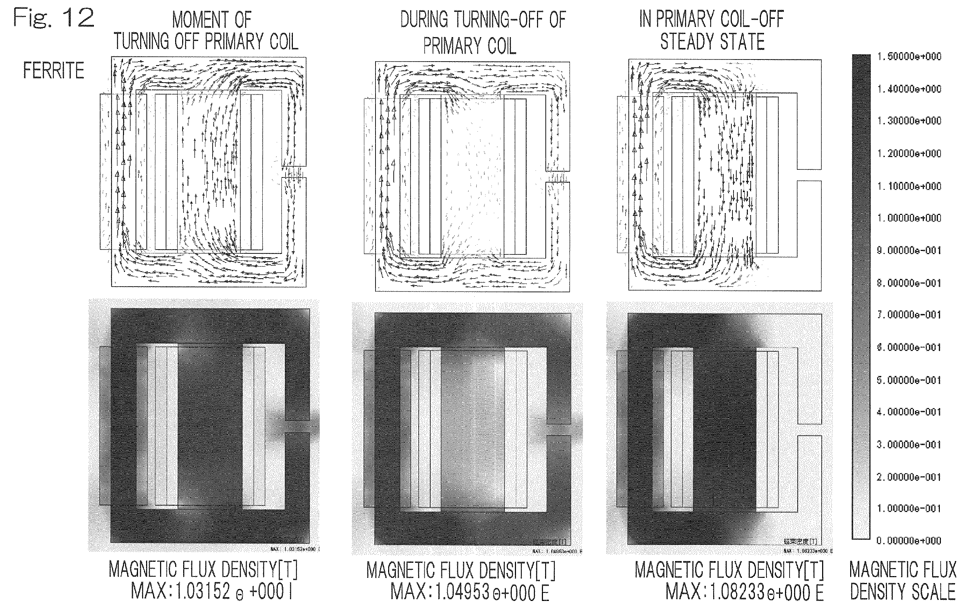

Figs. 9 to 12 show contour diagrams and vector diagrams of a magnetic flux density in a cross section of the sample. Figs. 9 and 10 show an example in the present embodiment using AL60, and Figs. 11 and 12 show a conventional art example using ferrite. Whereas, with ferrite, magnetic saturation occurs at a high current and a high frequency, AL60 is less susceptible to magnetic saturation, and thus can be used at a high current and a high frequency.

Flyback control in a transformer will be described.

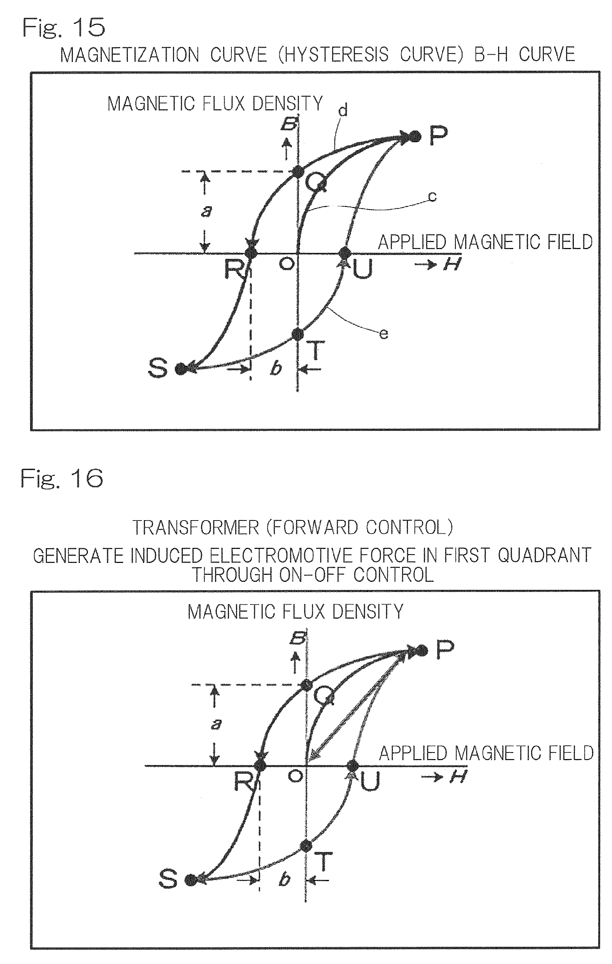

Fig. 15 shows a magnetization curve (hysteresis curve) (B-H curve) of a magnetic material.

When a magnetic field H is applied from a state where a magnetic flux density B is zero until a point P at which the magnetic material magnetically saturates, the magnetic material is magnetized along a curve c in Fig. 15. After the magnetic material is magnetized as described above, when the magnetic field H is decreased from the saturation point P to a reverse saturation point S, the magnetic flux density decreases along a curve d. When the magnetic field is applied again from the reverse saturation point S, the magnetic material is magnetized along a curve e. Such a hysteresis curve is so obtained. In Fig. 15 "a" indicates a residual magnetic flux density, and "b" indicates a retention force.

Fig. 16 shows forward control of the transformer. In the forward control, an induced electromotive force in the first quadrant is generated through ON-OFF control.

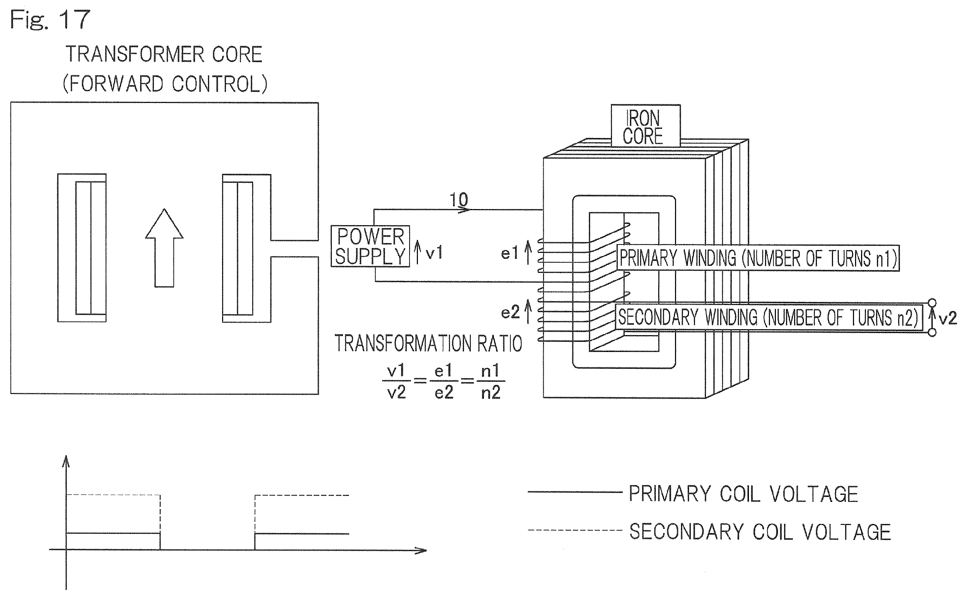

Fig. 17 shows a transformer core with which the forward control is performed. In the forward control, in order to generate the induced electromotive force in the first quadrant as described above, the relationship between a power supply voltage VI and an output voltage V2 is established as in the following formula.

$$V1/V2 = e1/e2 = n1/n2$$

Here, e1 and e2 are the voltages of the primary coil and the secondary coil, respectively, and n1 and n2 are the numbers of turns of the primary coil and the secondary coil, respectively.

Due to restrictions by magnetic saturation, it is difficult to increase the ratio between the output voltage V2 and the power supply voltage VI. An increase in the number of turns of the secondary coil leads to size increase.

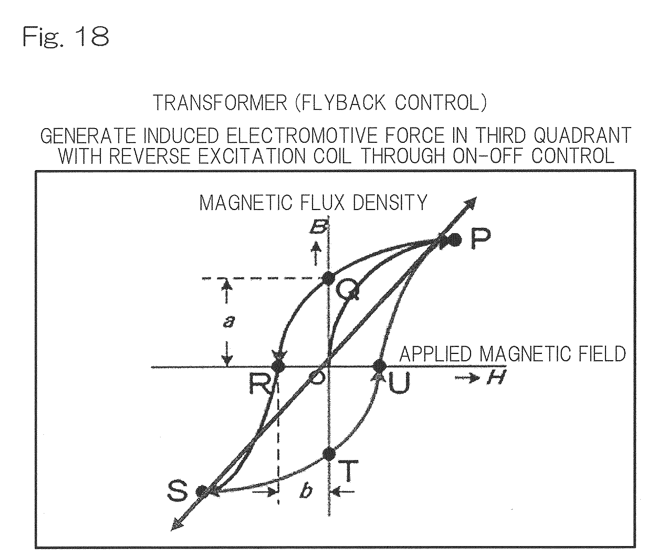

Fig. 18 shows flyback control of the transformer. In the flyback control, an induced electromotive force in the third quadrant is generated through ON-OFF control while a magnetic field is applied in the reverse direction by the reverse excitation coil.

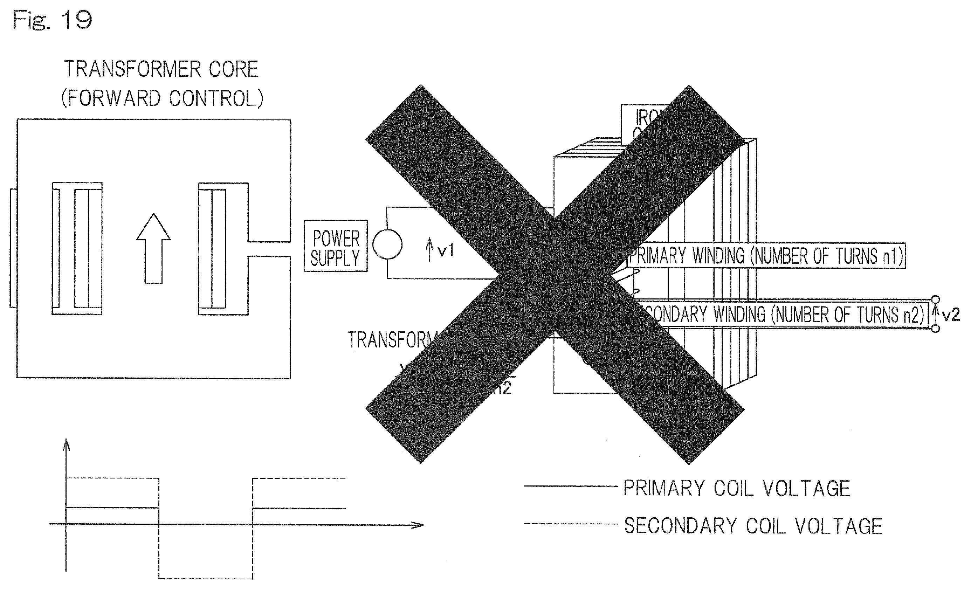

Thus, as shown in Fig. 19, the secondary coil voltage can be greatly changed in response to change in the primary coil voltage, and can be increased to a voltage which is about twice that in the forward control. A circuit with a thick X mark at the right side in Fig. 19 indicates that a circuit different from the corresponding circuit used during the forward control as shown in Fig. 17 is used.

Next, a first specific example of a manufacturing method and the material of the electric circuit-use core 1 in Fig. 1 or 2 will be described.

In the manufacturing method of the first specific example, magnetic powder contained in a resin composition to be used in injection molding is coated with an insulating material, either one of a compaction-molded magnetic material and a compaction-molded magnet article is insert-molded in the resin composition, and the compaction-molded magnetic material or the compaction-molded magnet article contains a binding material having a melting point lower than an injection molding temperature.

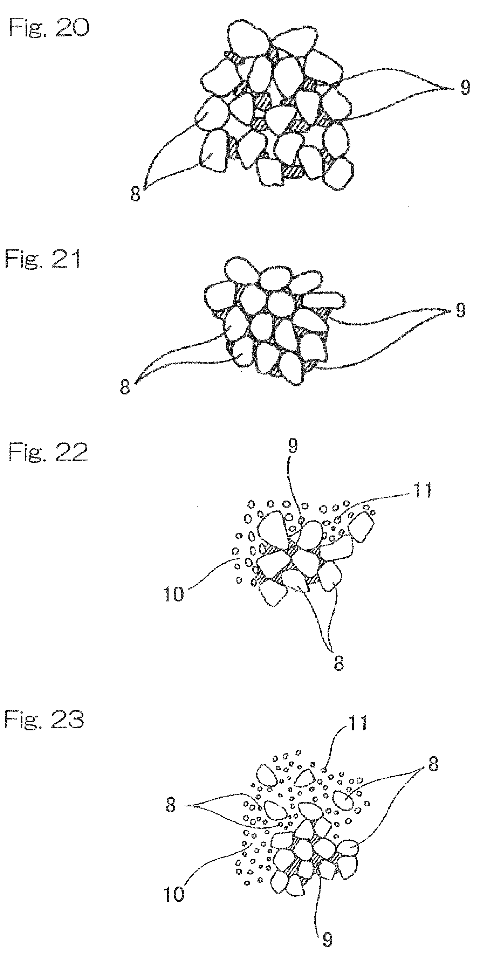

Fig. 20 shows a magnetic material which has been compaction-molded and is to be used in a method of manufacturing a resin molded magnetic core component according to an embodiment, and in which a large number of particles of a binding material 9 are contained (dispersed) among a large number of magnetic powder particles 8 forming magnetic powder which is coated with an insulating material.

As the binding material 9, a resin having a melting temperature lower than a predetermined injection molding temperature is used, and injection molding is performed at a predetermined temperature together with a base resin containing the magnetic powder coated with the insulating material, so that the binding material 9 is melted or softened, the intervals between the magnetic powder particles 8 are shortened as shown in Fig. 21, and the compaction-molded magnetic material shrinks to increase its bulk density.

As the magnetic powder particles 8, materials having excellent soft magnetic characteristics, for example, the following materials, are preferably used.

Metal powder, iron nitride powder, etc., as pure iron-based soft magnetic material

Fe-Si-Al alloy (sendust) powder, super sendust powder, Ni-Fe alloy (permalloy) powder, Co-Fe alloy powder, pure iron-based soft magnetic material, Fe-Si-B alloy powder, etc., as iron alloy-based soft magnetic material

Ferrite-based material

Amorphous material

Microcrystalline material

In addition, as the binding material 9 used in compaction-molding, the following thermoplastic resins can be used.

Polyolefins such as polyethylene and polypropylene

Polyvinyl alcohol, polyethylene oxide, PPS, liquid crystal polymer, PEEK, polyimide, polyether imide, polyacetal, polyether sulphone, polysulphone, polycarbonate, polyethylene terephthalate, polybutylene terephthalate, polyphenylene oxide, polyphthalamide, polyamide, etc.

Mixtures of the above resins

Furthermore, as the insulating material coating the magnetic powder particles 8 or the insulating material coating the magnetic powder of the base resin, the following materials can be used.
Oxides of insulating metals or semimetals, such as $Al_2O_3$, $Y_2O_3$, MgO, and $ZrO_2$

Glass material

Mixtures of these materials

The base resin used in injection molding is not particularly limited as long as the base resin is one that can be used in normal injection molding, and may be the same as or different from the resin used in the binding material 9. In order to pressurize and compress the compaction-molded article during injection molding, the melting point of the resin used in the binding material 9 is preferably lower than the injection molding temperature by 30°C or higher. However, if the difference in temperature therebetween is excessively great, adverse effects such as decomposition of the binding material 9 arise.
In addition, the binding material 9 does not necessarily need to be contained in the compaction-molded magnetic material. Even in the case where the compaction-molded magnetic material is merely insert-molded in the base resin, the compaction-molded magnetic material is disposed in a portion where it is desired to increase the magnetic flux density, whereby it is possible to make the magnetic flux density higher than that of a normal injection-molded article, and it is possible to reduce the size of the magnetic core component. Moreover, the shape of the compaction-molded magnetic material can be simplified, thus it is possible to increase the bulk density, and it is possible to prevent a crack from occurring, for example, when an electrode terminal is bent.
The particle size or diameter of the magnetic powder particles 8 used for the above-described compaction-molded magnetic material is preferably set to be larger than the particle size of the insulated magnetic powder particles contained in the resin composition as a base, and Fig. 22 shows a state during injection molding in the case of setting so.
As shown in Fig. 22, during injection molding, the binding material 9 melts, and the bulk density of the compaction-molded magnetic material increases. When the particle size of the magnetic powder particles 8 used for the compaction-molded magnetic material is larger than the particle size of magnetic powder particles 11 in a resin composition 10, the magnetic powder particles 8 enter gaps near the surface of the compaction-molded magnetic material, so that continuity as a magnetic material improves.
The particle size of the magnetic powder particles 8 used for the compaction-molded magnetic material is preferably about 1.5 times to 3 times that of the magnetic powder particles 11 in the resin composition 10 in terms of average particle size. Theoretically, the ratio between these particle sizes may be higher, but depending on a combination of magnetic powder particles, a problem may arise when compaction molding or injection molding is actually performed.
Furthermore, if the compaction-molded magnetic material has a shape with edges (e.g., a shape with large burrs) or has a low-density portion, or the amount of the binding material 9 is less than that of the magnetic powder particles 8, the magnetic powder particles 8 are at least partially pulverized due to pressure caused by flow during injection molding, and form a core component together with the resin composition as a base as shown in Fig. 23. Thus, the amount of the magnetic material packed in the resin composition substantially increases.
A second specific example of the manufacturing method and the material of the electric circuit-use core 1 in Fig. 1 or 2 will be described.
In the second specific example, a functional particle assembly is manufactured by the following method, and is used for the electric circuit-use core 1. This method includes a mixing step of mixing a binding material which binds functional particles to each other; and a baking step of baking mixture granulated powder obtained in the mixing step, in an oxidizing atmosphere to produce a functional particle assembly in which a plurality of functional particles are coated with an oxide film.

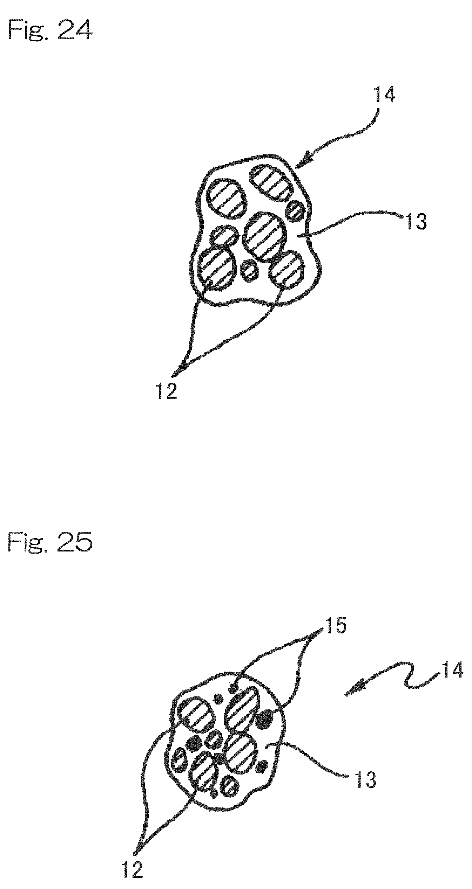

Fig. 24 shows a composition of a functional material according to the specific example, and the composition is granulated as a functional particle assembly 14 which includes: a plurality of functional particles 12 which are excellent in at least one of soft magnetic characteristics, electromagnetic wave absorption characteristics, and thermal conductivity; and an insulating material 13 which coats the functional particles 12.

In a conventional composition of a functional material, each of functional particles is coated with an insulating material. On the other hand, in the composition of the functional material according to the present specific example, the plurality of functional particles 12 are coated with the insulating material 13 to form the functional particle assembly 14, each of the functional particles 12 in the functional particle assembly 14 is not always insulated, and a certain functional particle 12 may be in contact with a functional particle 12 adjacent thereto.

In addition, by interspersing a plurality of insulating functional particles 15 between the plurality of functional particles 12 as shown in Fig. 25, it is possible to insulate the functional particles 12 from each other to some extent, whereby the insulation property further improves.

As the functional particles 12, a material which is excellent in soft magnetic characteristics, electromagnetic wave absorption characteristics, thermal conductivity, or the like is selected, and, for example, the following materials are preferable.

(1) Soft magnetic material

Metal powder, iron nitride powder, etc., as pure iron-based soft magnetic material

Fe-Si-Al alloy (sendust) powder, super sendust powder, Ni-Fe alloy (permalloy) powder, Co-Fe alloy powder, pure iron-based soft magnetic material, Fe-Si-B alloy powder, etc., as iron alloy-based soft magnetic material

Ferrite-based material

(2) Electromagnetic wave absorbing material

Carbon-based filler carbon black, graphite, carbon fiber, or mixtures thereof Ferrite-based material

(3) Thermal conductive material

Cu, Ni, Al, Cr, and alloy powder thereof

Ceramic powder of AlN, BN, $Si_3N_4$, SiC, $Al_2O_3$, BeO, etc.

(4) Synthetic resin

Polyolefins such as polyethylene, polypropylene, ethylene-vinyl acetate copolymer, and ionomer

Polyamides such as nylon 6, nylon 66, nylon 6/66, nylon 46, and nylon 12

Polyarylene sulfides such as polyphenylene sulfide, polyphenylene sulfide ketone, and polyphenylene sulfide sulfone

Polyesters such as polyethylene terephthalate, polybutylene terephthalate, and fully aromatic polyester

Polyimide-based resins such as polyimide, polyether imide, and polyamide imide

Polystyrene-based resins such as polystyrene and acrylonitrile-styrene copolymer

Chlorine-containing vinyl-based resins such as polyvinyl chloride, polyvinylidene chloride, vinyl chloride and vinylidene chloride copolymer, and chlorinated polyethylene

Poly(meth)acrylic esters such as poly methyl acrylate and poly methyl methacrylate

Acrylonitrile-based resins such as polyacrylonitrile and polymethacrylonitrile

Fluororesins such as tetrafluoroethylene/perfluoroalkyl vinyl ether copolymer, polytetrafluoroethylene, tetrafluoroethylene/hexafluoropropylene copolymer, and polyvinylidene fluoride

Various engineering plastics such as: silicone resin polyphenylene oxide such as polydimethylsiloxane; polyether ether ketone; polyether ketone; polyarylate; polysulfone; and polyether sulfone

Various thermoplastic resins such as polyacetal, polycarbonate, polyvinyl acetate, polyvinyl formal, polyvinyl butyral, polybutylene, polyisobutylene, polymethyl pentene, butadiene resin, polyethylene oxide, oxybenzoyl polyester, and polyparaxylene resin

Thermosetting resins such as epoxy resin, phenol resin, and unsaturated polyester resin, and mixtures of two or more types of these resins

A third specific example of the manufacturing method and the material of the electric circuit-use core 1 in Fig.

1 or 2 will be described.

In the third specific example, the following soft magnetic composite powder is used. Specifically, the soft magnetic composite powder is composite powder which is used for manufacturing of a soft magnetic molded article, and in which the surface of the soft magnetic material powder is coated with an inorganic insulating layer made of an inorganic insulating material, a resin material is fusion-bonded to the surface of the inorganic insulating layer so as to partially cover the surface of the soft magnetic material powder, the amount of the inorganic insulating material is 0.3 to 6 wt%, the amount of the resin material is 3 to 8 wt%, and the remainder is the soft magnetic powder.

Still Another Specific Example 1

In this specific example, one manufacturing method for composite powder using an inorganic insulating material as an electrically insulating material which coats the surface of soft magnetic material powder will be described.

The soft magnetic material used in this specific example includes oxide-based materials such as ferrite, and metal-based materials such as carbonyl iron, Fe-Si alloy, Ni-Fe alloy, and Fe-based or Co-based amorphous alloy. It is preferable to use a soft magnetic amorphous alloy which is excellent in corrosion resistance, wear resistance, strength, and soft magnetic characteristics such as high magnetic permeability or low retention force as compared to crystalline materials. The soft magnetic amorphous alloy is not particularly limited, and a publicly known amorphous alloy such as an iron-based or cobalt-based alloy can be used.

In addition, as the inorganic insulating material used in this specific example, for example, oxides of insulating metals or semimetals such as $Al_2O_3$, $SiO_2$, $Y_2O_3$, MgO, and $ZrO_2$, glass materials, or mixtures thereof can be used, but the glass materials are preferable. Among the glass materials, low-melting-point glass is preferable, because this glass has a low softening temperature and can be fusion-bonded to a soft magnetic amorphous alloy to coat the surface of the soft magnetic amorphous alloy.

The low-melting-point glass is not particularly limited as long as the low-melting-point glass does not react with the soft magnetic material powder and softens at a temperature lower than the crystallization onset temperature of the soft magnetic amorphous alloy, preferably at about 550°C or lower. For example, publicly known low-melting-point glasses, such as: lead-based glasses such as $PbO$-$B_2O_3$-based glass; $P_2O_5$-based glass; ZnO-BaO-based glass; and ZnO-$B_2O_3$-$SiO_2$-based glass, can be used. $P_2O_5$-based glass which is lead-free glass and imparts a low softening point is preferable. As an example, the glass of composition including 60 to 80% of $P_2O_5$, not greater than 10% of $Al_2O_3$, 10 to 20% of ZnO, not greater than 10% of $Li_2O$, and not greater than 10% of $Na_2O$ can be used.

In addition, as the resin used in this specific example, a conventionally publicly known thermoplastic resin or thermosetting resin can be used. Examples of the thermoplastic resin include polyolefins such as polyethylene and polypropylene, polyvinyl alcohol, polyethylene oxide, polyphenylene sulfide (PPS), liquid crystal polymer, polyether ether ketone (PEEK), polyimide, polyether imide, polyacetal, polyether sulphone, polysulphone, polycarbonate, polyethylene terephthalate, polybutylene terephthalate, polyphenylene oxide, polyphthalamide, polyamide, and the like; and mixtures or copolymers thereof. Examples of the thermosetting resin include phenol resin, epoxy resin, unsaturated polyester resin, diallyl phthalate resin, melamine resin, urea resin, and the like; and mixtures thereof.

In addition, regarding the form of the resin material, a resin material in powder form or fiber form can be used, but the resin material in powder form which is easily mixed is preferable.

Hereafter, still another specific example of the manufacturing method for the composite powder will be described. Specifically, the surface of the soft magnetic material powder is previously coated with an inorganic insulating material to form an inorganic insulating layer, and then a resin material is fusion-bonded to the inorganic insulating layer.

As a method for coating the soft magnetic material powder with the inorganic insulating material to form the inorganic insulating layer, a powder coating method such as mechano-fusion, a wet thin film producing method such as electroless plating or sol-gel method, or a dry thin film producing method such as sputtering can be used. The powder coating method can be performed, for example, by using the powder coating device described in JP Laid-open Patent Publication No. 2001-73062. According to this method, the soft magnetic material powder and low-melting-point glass powder receive a high compressive frictional force, so that the soft magnetic material powder and the low-melting-point glass powder are fused and the particles of the glass powder are welded to each other, whereby composite powder in which the surface of the soft magnetic material powder is coated with an inorganic insulating layer made of the low-melting-point glass can be obtained.

Next, resin powder is added and mixed with the soft magnetic material powder having the inorganic insulating layer. The resin powder is partially melted by mechanical energy during the mixing, and the melted portion thereof is fusion-bonded to the inorganic insulating layer. Accordingly, soft magnetic composite powder can be obtained. For the mixing, a publicly known solid phase mixing method with a ball mill or the like can be used. The temperature during the mixing may be equal to or higher than room temperature, and heating is preferably performed to a temperature equal to or higher than the softening temperature of the resin material. This is because fusion-bonding of the resin powder to the inorganic insulating layer is accelerated.

Here, in the case of using the soft magnetic material powder coated with the inorganic insulating layer, the particle size of the resin powder is smaller than the particle size of the soft magnetic material powder, and preferably equal to or smaller than half of the particle size of the soft magnetic material powder. For example, when the particle size of the soft magnetic material powder is equal to or less than 300 $\mu$m, 150 $\mu$m, or 45 $\mu$m, the particle size of the resin powder is preferably equal to or less than 150 $\mu$m, 75 $\mu$m, or 20 $\mu$m, respectively.

The composition of the composite powder needs to be set such that: the amount of the inorganic insulating material is 0.3 to 6 wt%, the amount of the resin material is 1 to 10 wt%, and the remainder is the soft magnetic material powder; more preferably, the amount of the inorganic insulating material is 0.4 to 3 wt%, the amount of the resin material is 2 to 8 wt%, and the remainder is the soft magnetic material powder; and further preferably, the amount of the inorganic insulating material is 0.4 to 1 wt%, the amount of the resin material is 3 to 8 wt%, and the remainder is the soft magnetic material powder. According to needs, 0.1 to 0.5 wt% of a lubricant can also be added.

According to needs, a stearate such as zinc stearate or calcium stearate can be added and mixed as a lubricant.

The composite powder of this specific example can be loaded into a predetermined mold and molded by using various molding methods such as compaction molding, injection molding, and extrusion molding. For example, in the case of compaction molding, the soft magnetic composite powder is loaded into the mold and press-molded under predetermined applied pressure, and the molded compact is baked to burn down the resin, whereby a baked article can be obtained. In the case where amorphous alloy powder is used as the soft magnetic material powder, the baking temperature needs to be lower than the crystallization onset temperature of the amorphous alloy.

In the case of injection molding, in order to ensure moldability, it is necessary to further add and knead resin powder with the soft magnetic composite powder. As the resin to be added, the same resin as in the composite powder or a resin different from the resin in the composite powder can be used. As the resin used in injection molding, a heat-resistant resin that has a deflection temperature under load of 100°C or higher which is specified in JISK7191 is preferable, and, for example, the thermoplastic resins other than polyolefin, polyvinyl alcohol, and polyethylene oxide among the above-described thermoplastic resins, and the above described thermosetting resins can be used. In kneading, in the case of a thermoplastic resin, heating at a temperature equal to or higher than the softening temperature of the thermoplastic resin is preferably performed. In addition, in the case of a thermosetting resin, kneading is preferably performed at a temperature equal to or lower than the decomposition temperature of the thermosetting resin, preferably at 300°C or lower. In the case of injection molding, in order to ensure moldability, the amount of the resin contained in a final molded article is preferably equal to or greater than 5 wt%.

The composite powder is preferably granulated. If the composite powder is granulated, the soft magnetic powder freely deforms also within the granulated particles due to the effect of partial fusion-bonding of the resin. As a result, large particles and small particles are densely packed, and a high bulk density is maintained. Furthermore, also among the granulated particles, deformation of the granulated particles is made possible due to the effect of partial fusion-bonding of the resin. As a result, the composite powder has a high bulk density. Thus, the granulated composite powder has a high bulk density and high deformability, and can be suitably used, in particular, in compaction molding.

The granulation can be performed through mixing-stirring granulation in which the resin powder is added and mixed with the soft magnetic material powder having the inorganic insulating layer as described above. However, in order to uniform the shape or particle size of the granulated particles, preferably, composite powder is used as raw material powder, and granulation is performed by using a publicly known method such as a self-granulation method by rolling or the like or a forcible granulation method by spray drying or the like.

Still Another Specific Example 2

This specific example relates to another manufacturing method for the soft magnetic composite powder. In the specific example 2, composite powder is manufactured by heating and mixing the soft magnetic material powder described in the still another specific example 1, an inorganic insulating material, and a resin material at a temperature equal to or higher than the melting point of the resin material. Preferably, glass powder is used as the inorganic insulating material, and resin powder is used as the resin material. The surface of the soft magnetic material powder can be coated with the resin powder fusion-bonded to the soft magnetic material powder and the glass powder bonded to the resin powder, and further the resin powder can be fusion-bonded to the surface of the glass powder to obtain the composite powder.

Here, the particle size of each of the glass powder and the resin powder is smaller than the particle size of the soft magnetic material powder, and preferably equal to or smaller than half of the particle size of the soft magnetic material powder. For example, when the particle size of the soft magnetic material powder is equal to or less than 300 $\mu$m, 150 $\mu$m, or 45 $\mu$m, the particle size of each of the glass powder and the resin powder is preferably equal to or less than 150 $\mu$m, 75 $\mu$m, or 20 $\mu$m, respectively.

In addition, the composition of the composite powder is preferably adjusted such that the amount of the inorganic insulating material is 0.3 to 10 wt%, the amount of the resin material is 1 to 10 wt%, and the remainder is the soft magnetic material powder; more preferably, the amount of the inorganic insulating material is 0.4 to 6 wt%, the amount of the resin material is 2 to 8 wt%, and the remainder is the soft magnetic material powder; and further preferably, the amount of the inorganic insulating material is 0.4 to 6 wt%, the amount of the resin material is 3 to 8 wt%, and the remainder is the soft magnetic material powder. The adjustment of the composition of the composite powder as described above allows the resin powder fusion-bonded to the glass powder to partially cover the surface of the soft magnetic material powder, and thus the same advantageous effects as those in Embodiment 1 can be obtained.

Still Another Specific Example 3

This specific example relates to a manufacturing method for a soft magnetic molded article. In this specific example, a soft magnetic baked article is produced from the composite powder described in the still other specific examples 1 and 2 as raw material powder, by so-called metal injection molding method (MIM). MIM is a method in which the above-described injection-molded article is degreased and baked to obtain a baked article. Conventionally, in MIM, the strength of the molded article after the degreasing step is very low, so that it is impossible to use the molded article as the soft magnetic material as it is. In addition, if the molded article is sintered, the insulation property decreases and it is difficult to obtain a material having high magnetic characteristics. However, use of the composite powder of the present invention as the raw material powder allows magnetic characteristics equivalent to those in the above-described compaction molding-baking method to be obtained. Here, in the composite powder for MIM, the thermal decomposition temperature of the resin in the composite powder is preferably equal to or higher than the thermal decomposition temperature of a resin to be added during injection molding (hereinafter, referred to as resin for MIM). This is because the network of the composite powder in the injection-molded article can be maintained until the final stage of degreasing and baking. In addition, the degreasing and baking can be carried out in one step.

As the resin for MIM, thermoplastic resins having functions of imparting plasticity to the raw material powder and imparting strength to the molded article at normal temperature, for example, one type of acrylic resins, polyolefin resins, polystyrene resins, and polyimide resins, a mixture of two or more types of these resins, or a copolymer of these resins can be used. Specific examples of the resin for MIM include polyethylene, polypropylene, polystyrene, ethylene-vinyl acetate copolymers, ethylene-ethyl acrylate copolymers, polymethacrylic acid acrylic esters, and polyamide.

In order to improve the degreasability and fluidity, a wax, a plasticizer, or the like can be added if needed.

As the wax, one type of or a mixture of two or more types of natural waxes such as beeswax, Japan wax, and montan wax, and synthetic waxes such as low-molecular-weight polyethylene, microcrystalline wax, and paraffin wax can be used. The wax can also serve as a plasticizer or a lubricant. In addition, according to needs, as a degreasing-accelerating agent, a sublimation substance such as camphor can also be used.

As the plasticizer, di-2-ethylhexyl phthalate, diethyl phthalate, di-n-butyl phthalate, or the like can be used. In addition, according to needs, a higher fatty acid, a fatty acid amide, a fatty acid ester, or the like can be used as a lubricant.

In MIM, in producing the composite powder, addition of the resin can be omitted. That is, the baked article can be obtained by adding the resin material to the soft magnetic material powder whose surface is coated with the electrically insulating material containing at least the inorganic insulating material, kneading the mixture, injection-molding the mixture, and degreasing and baking the injection-molded article.

The molded article using the soft magnetic composite powder described above in each of the specific examples can be used not only as a magnetic core but also as an electromagnetic wave absorber. That is, an electromagnetic wave absorber containing a soft magnetic material having a high magnetic permeability can reduce reflected waves and transmitted waves by absorbing electromagnetic waves. Conventionally, an electromagnetic wave absorber is used which is obtained by dispersing an electromagnetic wave absorbing material in a matrix of a resin, rubber, or the like and molding the mixture through extrusion molding, press-molding or the like, but it is not easy to pack the electromagnetic wave absorbing material at a high density, and thus sufficient electromagnetic wave absorbing capability has not been obtained. However, use of the soft magnetic composite powder of the present invention allows for improvement of the bulk density of the soft magnetic material, and thus it is possible to improve the electromagnetic wave absorbing capability.

In addition, the molded article using the soft magnetic composite powder described above in each of the specific examples can also be used as a magnetic shielding material. Since the soft magnetic material having a high magnetic permeability is used and the bulk density of the soft magnetic material to be dispersed in the matrix can be improved, it is possible to improve the magnetic shielding characteristics.

Hereinafter, various electric circuits using the electric circuit-use core 1 of the present embodiment, and various devices including the electric circuits will be described. Regarding the shape of the electric circuit-use core 1, shapes other than the shapes shown in Figs. 1 to 6 are included.

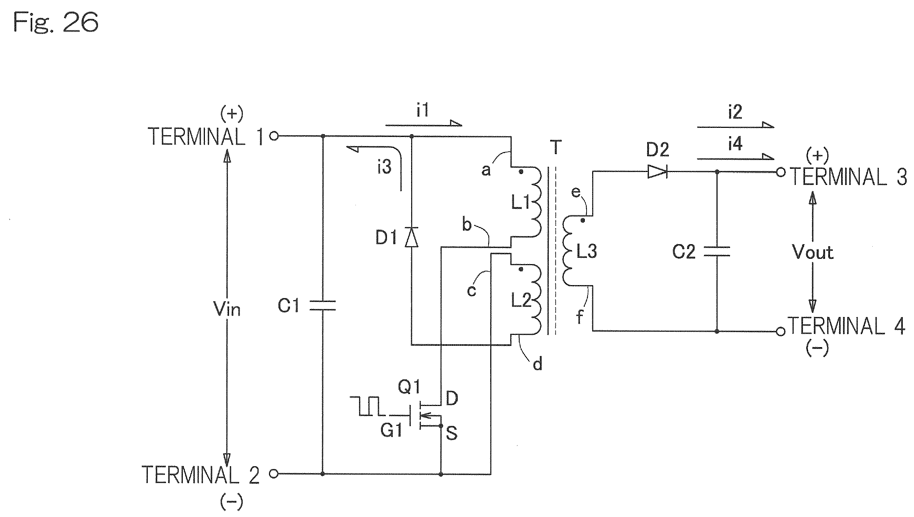

Fig. 26 shows the circuit configuration of a switching power supply circuit. The circuit in Fig. 26 includes a transformer T having a first coil L1, a second coil L2, and a third coil L3. A winding start terminal of each coil is indicated by a black dot (the same applies to the following). These three coils magnetically couple with each other, and the transformer T is configured such that the first coil L1 and the second coil L2 closely magnetically couple (hereinafter, referred to as closely couple) with each other, and the third coil L3 loosely magnetically couples (hereinafter, referred to as loosely couples) with the first and second coils L1, L2. The close coupling is conventional general transformer coupling, and between these coils, major part of a magnetic flux generated from the coil at the magnetic flux generating side flows to the coil at the magnetic flux receiving side. On the other hand, between the coils that loosely couple with each other, part of a magnetic flux generated from the coil at the magnetic flux generating side is intentionally leaked to a leakage magnetic circuit to be bypassed, so that the magnetic flux decreased by the leaked magnetic flux flows to the coil at the magnetic flux receiving side.

The transformer T in Fig. 26 is characterized in that the first coil L1 and the second coil L2 are wound so as to be in close contact with each other, the third coil L3 is wound so as not to be in close contact with both the first coil L1 and the second coil L2 and to be separated from both coils L1, L2, and the leakage magnetic circuit is formed in the gap between the first and second coils L1, L2 and the third coil L3 which are separated from each other.

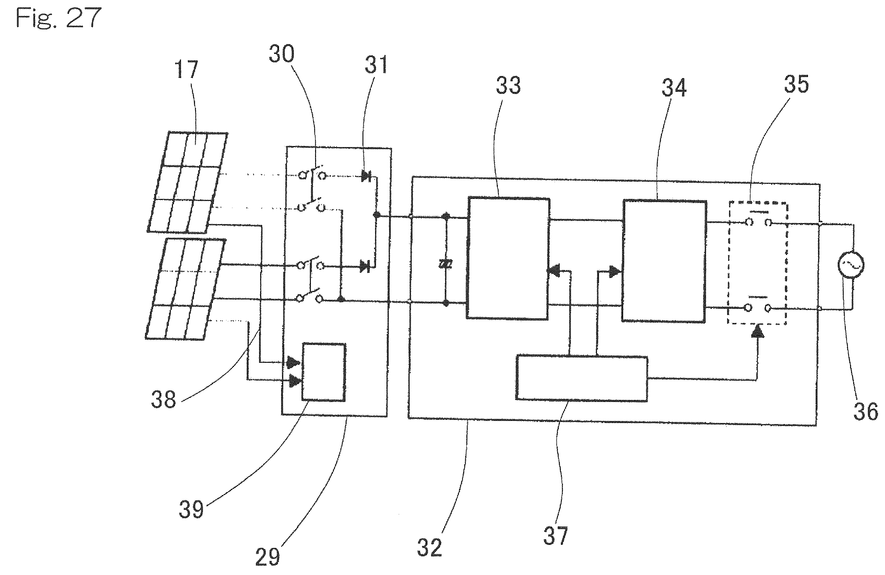

Fig. 27 is a system configuration diagram of a solar cell power generation device. The electric circuit-use core 1 of the present embodiment is used in a DC/DC converter 33 of a power conditioner 32 in the solar cell power generation device.

The configuration will be described with reference to Fig. 27. In Fig. 27, a module string 17 including several solar cell modules connected in series is provided in parallel, and each of outputs of the module strings are inputted to a connection box 29 and connected to an open/close switch 30 respectively. An output from each open/close switch 30 passes through a backflow prevention diode 31, then is collected into a single output, and is inputted to the power conditioner 32. The DC power inputted to the power conditioner 32 is stepped up or down by the DC/DC converter 33, then inputted to an inverter 34, and converted to AC power by the inverter 34. The AC power is outputted via an interconnection relay 35 from the power conditioner 32. The output of the power conditioner 32 is consumed by a load (not shown) such as electric devices within a house, but the excess portion of the output can be caused to reversely flow by a power system 36 and can be sold to an electric power company. The DC/DC converter 33 and the inverter 34 are controlled by controller 37 within the power conditioner 32.

A power generation state detection signal 38 is outputted from each solar cell module forming the module string 17 and inputted to power generation state display unit 39 within the connection box 29.

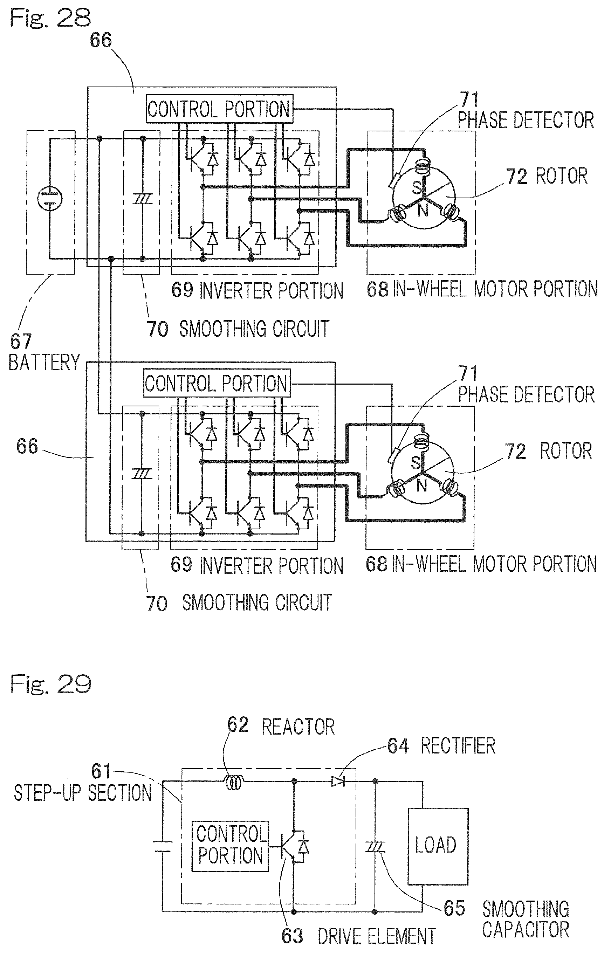

Figs. 28 and 29 show an example of application to a reactor 62 of a step-up device (step-up section 61) provided in an inverter device of an electric vehicle. An in-wheel motor portion 68 is driven by an inverter device 66 with power of a battery 67. The in-wheel motor portion 68 includes a rotor 72 and a phase detector 71 and the like. The inverter device 66 includes an inverter portion 69 and a smoothing circuit 70.

For the motor driving, in order to improve efficiency, a step-up circuit may be used to increase the power supply voltage of the battery. The step-up section 61 includes a drive element 63, the reactor 62, and a rectifier 64 as shown in Fig. 29 in which the circuit configuration of the step-up section 61 is shown in a schematic diagram. Reference numeral 65 denotes a smoothing capacitor.

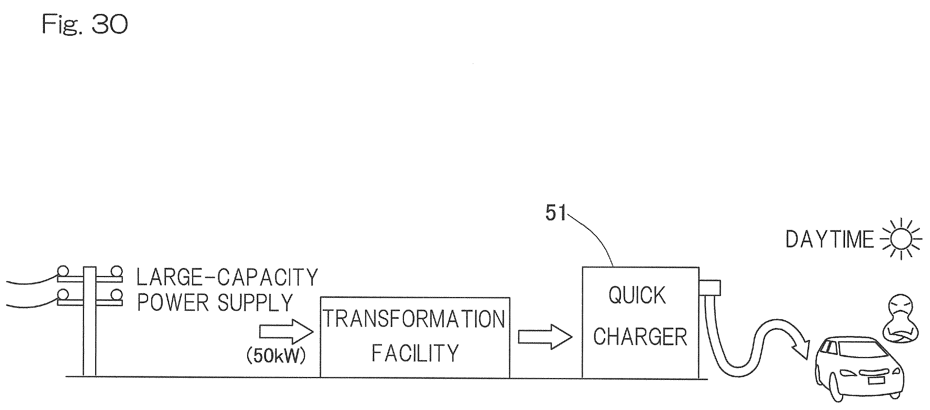

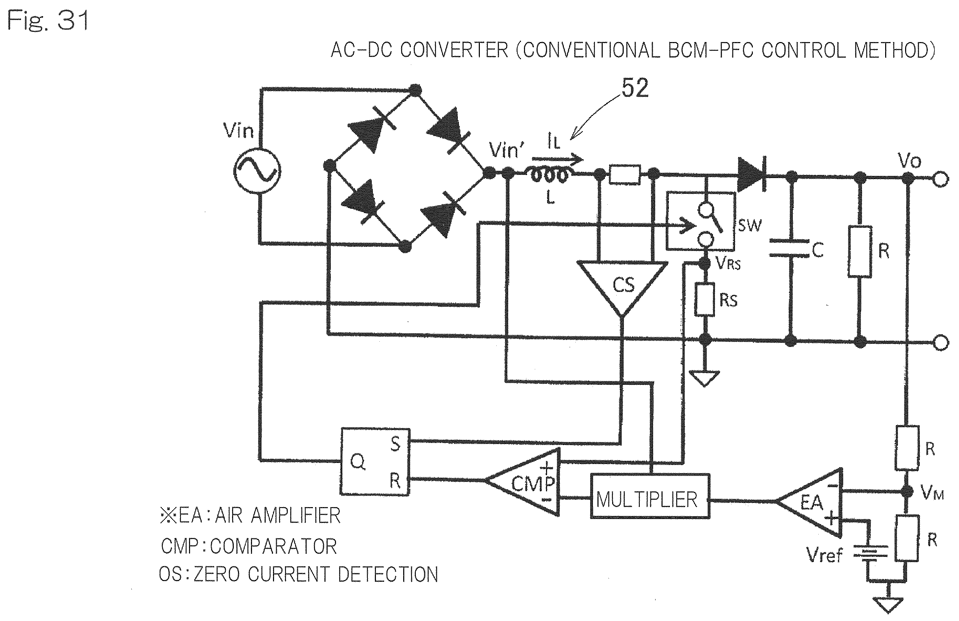

Figs. 30 and 31 show an outline of a charging station including a quick charging device 51. The electric circuit-use core 1 according to the present embodiment is used in a reactor 52 of a DC/AC conversion circuit in Fig. 31 in the quick charging device 51.

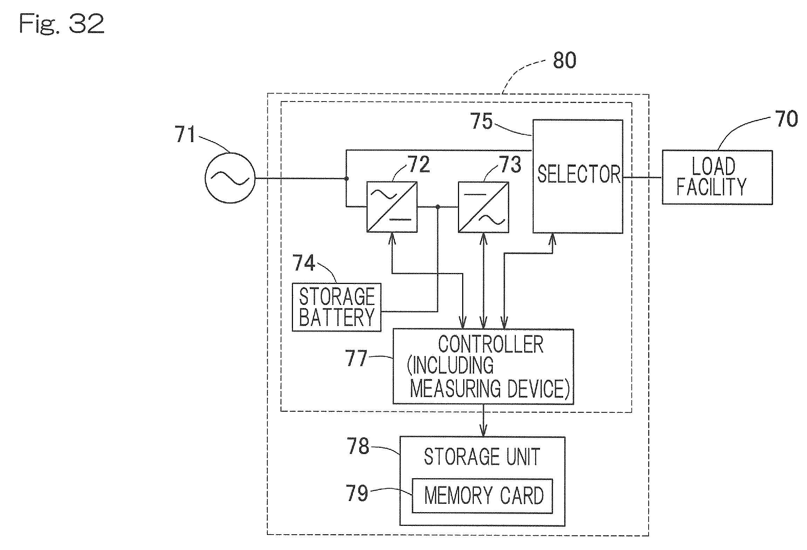

Fig. 32 shows an example of application to an uninterruptible power supply device 80 which is provided in a data center and supplies power to a load facility during a power failure.

The electric circuit-use core 1 according to the present embodiment is used in a DC/DC conversion circuit (not shown) which steps up DC power of a storage battery 74.

The uninterruptible power supply device 80 is a device which supplies power to a load facility 70 by using: a converter 72 which converts AC commercial power 71 to DC power; the storage battery 74 which is charged with the DC power; and an inverter 73 which converts DC power outputted from the converter 72 and the storage battery 74 to AC power. In addition to the above-described feed path to be used in a normal state, the uninterruptible power supply device 80 includes a bypass feed path by the commercial power 71, and has a capability of switching between the two feed paths by a selector 75 in an uninterrupted manner. The electric circuit-use core 1 according to the present embodiment is also used in the converter 72.

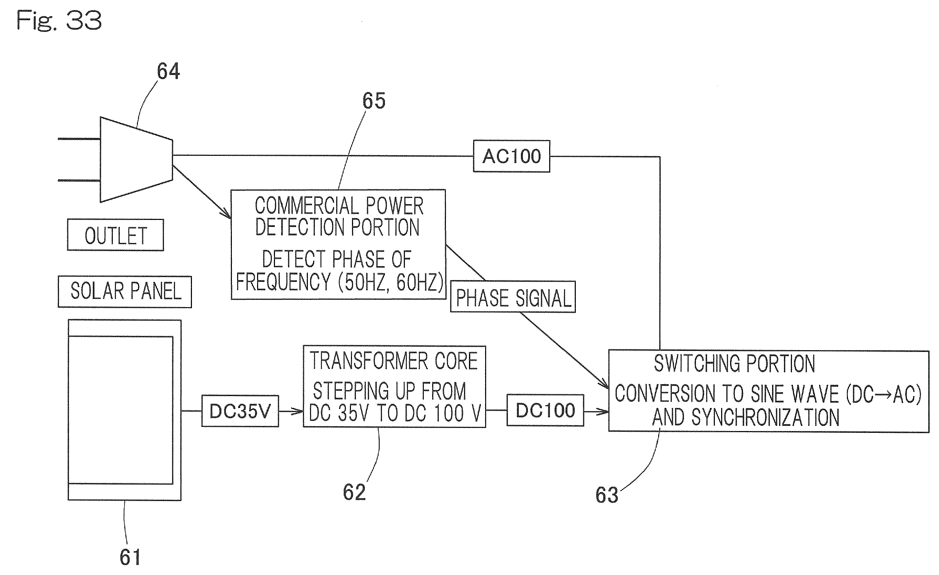

Fig. 33 shows an outline of a device which supplies power generated by a solar panel 61 including solar cells, to commercial power for dwelling houses or the like. The voltage of the power generated by the solar panel 61 is about DC 35 V, and is stepped up to DC 100 V by a DC/DC conversion circuit 62. The electric circuit-use core 1 which is a transformer core in the present embodiment is used in the DC/DC conversion circuit 62. The direct current stepped up to DC 100V by the DC/DC conversion circuit 62 is converted to an alternating current of 100 V by a switching portion 63 which is a DC/AC converter (inverter), and is supplied from a plug 64 via an outlet (not shown) to a circuit of 100-V AC commercial power within the house. The plug 64 includes a commercial power detection portion 65 which detects a phase regarding whether the frequency of the 100-V AC commercial power within the house is 50 Hz or 60 Hz, and sends the phase signal to the switching portion 63. The switching portion 63 performs conversion to an alternating current having the same frequency as the detected frequency.

The voltage of the commercial power in wiring at the indoor side relative to a distribution switchboard in the housing or the like actually varies in accordance with a usage state of a connected electric device. Operation of a general home electric appliance is not affected by slight voltage variation or frequency variation. Thus, no problem arises even when the power generated by the solar panel 61 is converted to AC power by the DC/DC conversion circuit 62 and the switching portion 63 each having a simple configuration, and is consumed in the house. That is, in the case where the power generated by the solar panel 61 is supplied to commercial power outside the house to request buying of the power, strict control is required for voltage, frequency, phase, and the like, and thus the DC/DC conversion circuit 62 and the switching portion 63 are needed to have high accuracy, leading to an increase in cost. However, if the power is consumed in the house, conversion with high accuracy is not required as long as no problem arises in operation of a home electric appliance, and thus with a simple and low-priced device, power obtained through photovoltaic power generation is allowed to be used by a home electric appliance.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed within the scope of the present invention.

[Reference Numerals]

1 ···· electric circuit-use core
2 ···· pillar portion
$2_2$ ···· reverse excitation pillar portion
3 ···· connection portion
4 ···· primary coil
5 ···· secondary coil
6 ···· reverse excitation coil

**Claims**

1. An electric circuit-use core which is a dust core formed by compression molding or injection molding with an iron-based amorphous material, a cobalt-based amorphous material, or a sendust material as a magnetic material, and is a transformer core, a choke core, or a core of a reactor.

2. The electric circuit-use core as claimed in claim 1, comprising a plurality of parallel pillar portions and connection portions connecting both ends of the pillar portions, wherein
at least two pillar portions of the plurality of pillar portions and the connection portion are separately formed by compression molding or injection molding with an iron-based amorphous material, a cobalt-based amorphous material, or a sendust material as a magnetic material.

3. An electric circuit which is a DC/DC conversion circuit or DC/AC conversion circuit using the electric circuit-use core as claimed in claim 1 or 2.

4. A solar cell power generation device comprising a solar cell and a power conditioner configured to convert DC power generated by the solar cell to AC power, wherein the power conditioner includes a DC/DC conversion circuit having the electric circuit-use core as claimed in claim 1 or 2.

5. An on-vehicle step-up device mounted on a vehicle which is an electric vehicle or plug-in hybrid vehicle, the on-vehicle step-up device comprising a reactor, which includes the electric circuit-use core as claimed in claim 1 or 2.

6. A charging station-use quick charging device provided in a charging station, the charging station-use quick charging device comprising a DC/AC conversion circuit which includes the electric circuit-use core as claimed in claim 1 or 2.

7. A data center emergency power supply device which is provided in a data center and configured to supply power to a load facility during a power failure, the data center emergency power supply device comprising a DC/DC conversion circuit configured to step up DC power of a storage battery, the DC/DC conversion circuit including the electric circuit-use core as claimed in claim 1 or 2.

8. A method for manufacturing an electric circuit-use core which includes a plurality of parallel pillar portions made of a magnetic material and connection portions made of a magnetic material connecting both ends of the pillar portions, and is used as a transformer core, a choke core, or a core of a reactor, the method comprising:

forming each of the pillar portions and the connection portions as a molded article by compression molding or injection molding with an iron-based amorphous material, a cobalt-based amorphous material, or a sendust material as a magnetic material; and

preparing a plurality of types of molded articles whose materials are different from each other, as molded article which is to be the pillar portion, selecting any molded article from the plurality of prepared molded articles, combining the selected molded article to be joined to the connection portions, to form the transformer core, the choke core, or the core of the reactor.

Fig. 1

Fig. 2

Fig. 3

Fig. 4

Fig. 5

Fig. 6

Fig. 7

Fig. 8

Fig. 9

Fig. 10

AL60

MOMENT OF TURNING OFF PRIMARY COIL

DURING TURNING-OFF OF PRIMARY COIL

IN PRIMARY COIL-OFF STEADY STATE

MAGNETIC FLUX DENSITY[T]
MAX:1.29089e+0

MAGNETIC FLUX DENSITY[T]
MAX:1.28947e+0

MAGNETIC FLUX DENSITY[T]
MAX:1.32074e+0

MAGNETIC FLUX DENSITY SCALE

1.50000e+000
1.40000e+000
1.30000e+000
1.20000e+000
1.10000e+000
1.00000e+000
9.00000e-001
8.00000e-001
7.00000e-001
6.00000e-001
5.00000e-001
4.00000e-001
3.00000e-001
2.00000e-001
1.00000e-001
0.00000e+000

EP 2 983 179 A1

Fig. 11

FERRITE

MOMENT OF
TURNING ON PRIMARY COIL

DURING TURNING-ON OF
PRIMARY COIL

IN PRIMARY COIL-ON
STEADY STATE

MAGNETIC FLUX DENSITY[T]

MAGNETIC FLUX DENSITY[T]
MAX:1.08212ө+000 EL

MAGNETIC FLUX DENSITY[T]
MAX:1.03520ө+000 E

MAGNETIC FLUX
DENSITY SCALE

1.50000e+000
1.40000e+000
1.30000e+000
1.20000e+000
1.10000e+000
1.00000e+000
9.00000e-001
8.00000e-001
6.00000e-001
5.00000e-001
4.00000e-001
3.00000e-001
2.00000e-001
1.00000e-001
0.00000e+000

Fig. 12

FERRITE

| MOMENT OF TURNING OFF PRIMARY COIL | DURING TURNING-OFF OF PRIMARY COIL | IN PRIMARY COIL-OFF STEADY STATE |

MAGNETIC FLUX DENSITY[T]
MAX:1.03152 ᵉ +000 I

MAGNETIC FLUX DENSITY[T]
MAX:1.04953 e+000 E

MAGNETIC FLUX DENSITY[T]
MAX:1.08233 ᵉ+000 E

MAGNETIC FLUX DENSITY SCALE

1.50000e+000
1.40000e+000
1.30000e+000
1.20000e+000
1.10000e+000
1.00000e+000
9.00000e-001
8.00000e-001
7.00000e-001
6.00000e-001
5.00000e-001
4.00000e-001
3.00000e-001
2.00000e-001
1.00000e-001
0.00000e+000

EP 2 983 179 A1

Fig. 13

Fe-6.5Si    VOLTAGE ANALYSIS RESULT

Legend: PRIMARY VOLTAGE, SECONDARY VOLTAGE

VOLTAGE [V] (y-axis: 150, 100, 50, 0, −50, −100, −150)

TIME [s] (x-axis: 0.00E+0 0, 5.00E−05, 1.00E−04, 1.50E−04, 2.00E−04, 2.50E−04)

EP 2 983 179 A1

Fig. 14

Fe-6.5Si    VOLTAGE ANALYSIS RESULT

EP 2 983 179 A1

Fig. 15

MAGNETIZATION CURVE (HYSTERESIS CURVE) B-H CURVE

Fig. 16

TRANSFORMER (FORWARD CONTROL)
GENERATE INDUCED ELECTROMOTIVE FORCE IN FIRST QUADRANT
THROUGH ON-OFF CONTROL

Fig. 17

TRANSFORMER CORE
(FORWARD CONTROL)

POWER SUPPLY $\uparrow$ v1

10

IRON CORE

e1 $\uparrow$  PRIMARY WINDING (NUMBER OF TURNS n1)

e2 $\uparrow$  SECONDARY WINDING (NUMBER OF TURNS n2) $\uparrow$ v2

TRANSFORMATION RATIO

$$\frac{v1}{v2} = \frac{e1}{e2} = \frac{n1}{n2}$$

———————— PRIMARY COIL VOLTAGE

------------ SECONDARY COIL VOLTAGE

EP 2 983 179 A1

Fig. 18

TRANSFORMER (FLYBACK CONTROL)
GENERATE INDUCED ELECTROMOTIVE FORCE IN THIRD QUADRANT
WITH REVERSE EXCITATION COIL THROUGH ON-OFF CONTROL

Fig. 19

TRANSFORMER CORE
(FORWARD CONTROL)

POWER
SUPPLY ○ ↑v1

PRIMARY WINDING (NUMBER OF TURNS n1)

SECONDARY WINDING (NUMBER OF TURNS n2) ↑v2

———— PRIMARY COIL VOLTAGE

-------- SECONDARY COIL VOLTAGE

EP 2 983 179 A1

Fig. 20

Fig. 21

Fig. 22

Fig. 23

Fig. 24

Fig. 25

Fig. 26

TERMINAL 3 (+)

TERMINAL 4 (−)

Vout

i2
i4

D2

C2

e   L3   f

T

L1   L2

a   b   c   d

i1

i3

D1

Q1   D   S   G1

C1

TERMINAL 1 (+)

Vin

TERMINAL 2 (−)

Fig. 27

EP 2 983 179 A1

## Fig. 28

## Fig. 29

Fig. 30

Fig. 31

AC-DC CONVERTER (CONVENTIONAL BCM-PFC CONTROL METHOD)

Vin

Vin'

$I_L$

L

52

SW

$V_{RS}$

$R_S$

CS

C

R

Vo

R

$V_M$

R

EA

Vref

MULTIPLIER

CMP

S

Q

R

※EA：AIR AMPLIFIER
CMP：COMPARATOR
OS：ZERO CURRENT DETECTION

35

Fig. 32

EP 2 983 179 A1

Fig. 33

64

OUTLET

SOLAR PANEL

65

COMMERCIAL POWER DETECTION PORTION

DETECT PHASE OF FREQUENCY (50HZ, 60HZ)

AC100

PHASE SIGNAL

DC35V

TRANSFORMER CORE

STEPPING UP FROM DC 35V TO DC 100 V

DC100

SWITCHING PORTION

CONVERSION TO SINE WAVE (DC→AC) AND SYNCHRONIZATION

62

63

61

EP 2 983 179 A1

## INTERNATIONAL SEARCH REPORT

| International application No. |
| --- |
| PCT/JP2014/057156 |

A.   CLASSIFICATION OF SUBJECT MATTER
*H01F27/24*(2006.01)i, *H01F27/255*(2006.01)i, *H01F41/02*(2006.01)i, *H02M3/155* (2006.01)i, *H02M3/28*(2006.01)i

According to International Patent Classification (IPC) or to both national classification and IPC

B.   FIELDS SEARCHED

Minimum documentation searched (classification system followed by classification symbols)
H01F27/24, H01F27/255, H01F41/02, H02M3/155, H02M3/28

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2013-51402 A  (Sumitomo Electric Industries, Ltd.),<br>14 March 2013 (14.03.2013),<br>paragraphs [0001], [0027], [0035]; fig. 1<br>paragraphs [0001], [0027], [0035]; fig. 1<br>& WO 2013/018381 A1 | 1,3-7<br>2,8 |
| Y | JP 2011-159851 A  (Tabuchi Electric Co., Ltd.),<br>paragraphs [0003], [0009], [0012], [0023], [0028], [0038], [0043]; fig. 1 to 7<br>(Family: none) | 2,8 |

☐  Further documents are listed in the continuation of Box C.       ☐  See patent family annex.

| | | |
| --- | --- | --- |
| *   Special categories of cited documents: | "T" | later document published after the international filing date or priority date and not in conflict with the application but cited to understand the principle or theory underlying the invention |
| "A"   document defining the general state of the art which is not considered    to be of particular relevance | | |
| "E"   earlier application or patent but published on or after the international filing date | "X" | document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
| --- | --- |
| 28 March, 2014 (28.03.14) | 08 April, 2014 (08.04.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**EP 2 983 179 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013061529 A
- JP 2014044972 A
- JP 2008048527 A
- JP 4763609 B
- JP 4635000 B
- JP 4452240 B
- JP 2001073062 A